# FASCICULE DE BREVET EUROPEEN

(11) **EP 3 560 318 B1**
(45) Date de publication et mention de la délivrance du brevet: **10.03.2021**
(21) Numéro de dépôt: 19169744.0
(22) Date de dépôt: 17.04.2019
(51) Int. Cl.: A01D 80/02

(54) **MACHINE DE FENAISON À ROTORS POURVUS D'OUTILS SÉCURISÉS**
HEUERNTEMASCHINE MIT ROTOREN, DIE MIT GESICHERTEN WERKZEUGEN VERSEHEN SIND
HAYMAKING MACHINE WITH ROTORS PROVIDED WITH SECURED TOOLS

(30) Priorité: 26.04.2018 FR 1853653
(43) Date de publication de la demande: 30.10.2019
(73) Titulaire: Kuhn SAS, 67700 Saverne (FR)
(72) Inventeur: DAUTREMONT, Emmanuel, 67320 BERG (FR)
(74) Mandataire: Cabinet Nuss

(56) Documents cités:
- EP-A1- 3 132 668
- EP-A2- 1 929 857
- DE-U1- 20 117 668
- FR-A1- 2 630 881
- FR-A1- 3 006 553
- US-A- 2 608 046

## Description

La présente invention concerne le domaine du machinisme agricole et porte sur une machine de fenaison avec des moyens de protection améliorés.

L'invention vise plus particulièrement une machine de fenaison comprenant au moins un rotor comportant au moins un bras support rotatif à extension radiale, avec une extrémité intérieure reliée au moyeu du rotor et une extrémité extérieure opposée portant au moins un outil de travail possédant des brins reliés par une portion intermédiaire présentant, d'une part, des spires et, d'autre part, au moins une section coudée de fixation au bras support, ce bras s'étendant intérieurement à travers au moins certaines des spires et une pièce de rétention de spires désolidarisées du bras support étant rapportée sur ce dernier.

Les rotors sont typiquement montés alignés sur un châssis roulant. Les deux brins, les spires et la partie coudée de fixation de chaque outil de travail sont généralement formés à partir d'un unique segment de fil d'acier conformé pour constituer l'outil.

Pour éviter que le fourrage déplacé - ou végétaux - par les brins ne viennent en contact avec les spires et ne réduisent leur déformabilité, il a été proposé de mettre en place des capots de protection, comme décrit dans les documents DE 1 482 174 et EP 1 929 857, qui présentent plus généralement des exemples de machines de fenaison du type visé.

Toutefois, ce type de machine est exposé à un facteur de risque sécuritaire nettement plus important. En effet, lors du fonctionnement, les brins peuvent être soumis à d'importants efforts, du fait de l'avance de la machine par exemple ou lorsqu'un outil de travail rencontre un gros obstacle tel qu'une borne ou une grosse pierre partiellement enterrée, et les spires proches du brin extérieur (qui est le plus sollicité) subissent alors d'importantes déformations pouvant entraîner une rupture à leur niveau. Dans ce cas, les spires situées vers l'extérieur au-delà du point de rupture et le brin extérieur correspondant se détachent du bras. Un tel brin désolidarisé est dangereux s'il est projeté en l'air. De plus, il peut se perdre dans le fourrage et provoquer des dégâts considérables s'il venait à passer dans une presse ou une ensileuse utilisée pour la récolte.

Par le document EP 1 929 857 précité, la demanderesse a déjà proposé une solution permettant d'éviter la projection et la perte d'une telle partie désolidarisée d'un outil de travail cassé, tout en conférant une protection des spires contre le fourrage déplacé.

Néanmoins, la pièce assurant la fonction double précitée est de construction complexe et surtout sa fixation par le biais d'un boulon, qui assure simultanément la solidarisation de l'outil de travail avec le bras support, est fastidieuse et pénalisante en temps pour le monteur.

Par les documents EP 3 132 668 et FR 3 006 553, on connaît par ailleurs des machines de fenaison du type précité dans lesquelles la fonction de rétention d'une partie désolidarisée d'outil cassé sur le bras support est assurée par une pièce sous forme de bouchon comportant une partie principale allongée emboîtée dans l'extrémité du bras support et une partie secondaire avec une collerette dont le diamètre extérieur est supérieur au diamètre intérieur des spires.

Toutefois, la mise en œuvre de ces solutions nécessite obligatoirement une extrémité de bras support qui est creuse et son montage avec un boulon est également fastidieux.

Une autre solution connue propose une rétention au niveau des brins et non des spires, en les solidarisant ensemble, ce qui limite la souplesse de l'outil.

Enfin, il existe également des solutions dans lesquelles l'outil de travail n'est pas directement fixé sur le bras support (celui-ci ne traverse pas les spires), mais sur une pièce accessoire de forme complexe qui elle est fixée au bras support. La construction résultante est complexe et coûteuse, et l'assemblage compliqué de pièces multiples est fastidieux.

Le but de l'invention est de proposer une solution constructive simple et peu coûteuse, permettant la rétention sur le bras support de la partie désolidarisée d'un outil de travail cassé, pouvant être mise en œuvre avec un bras support plein ou creux, dont le nombre de pièces est réduit et dont l'assemblage est facilité. En outre, cette solution devrait si possible être aisément combinable avec la réalisation ou la fixation d'un capot de protection.

A cet effet, l'invention a pour objet une machine de fenaison comprenant au moins un rotor comportant au moins un bras support rotatif à extension radiale, avec une extrémité intérieure reliée au moyeu du rotor et une extrémité extérieure opposée portant au moins un outil de travail possédant des brins reliés par une portion intermédiaire présentant, d'une part, des spires et, d'autre part, au moins une section coudée de fixation au bras support, ce bras s'étendant intérieurement à travers au moins certaines des spires et une pièce de rétention de spires désolidarisées du bras support étant rapportée sur ce dernier,
machine caractérisée en ce que ladite pièce de rétention intègre au moins une partie du ou des moyens de fixation de l'outil de travail concerné sur le bras support.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une représentation de dessus d'un exemple de machine de fenaison, du type faneur, selon l'invention ;
la figure 2 est une vue en perspective d'un bras support équipé d'un outil de travail (dépourvu de capot) faisant partie d'un rotor d'une machine de fenaison selon l'invention ;
la figure 3 est vue partielle à une échelle différente et en coupe selon un plan contenant l'axe du boulon de fixation et l'axe médian de la portion d'extrémité extérieure, d'un bras support pourvu d'un outil de travail tel représenté figure 2 (pourvu d'un capot de protection), selon un premier mode de réalisation de l'invention ;
la figure 4 est une vue similaire à celle de la figure 3 d'une variante constructive du premier mode de réalisation de l'invention (outil dépourvu de capot) ;
la figure 5 est une vue de dessus et en coupe selon V-V de l'objet représenté figure 3 ;
la figure 6 est une vue similaire à celle de la figure 3 d'un deuxième mode de réalisation de l'invention (outil dépourvu de capot) ;
la figure 7 est une vue en coupe selon VII - VII de l'objet de la figure 5, et,
les figures 8 et 9 sont des vues en coupe similaires à celles des figures 3, 4 et 6, illustrant deux variantes constructives d'un troisième mode de réalisation de l'invention.

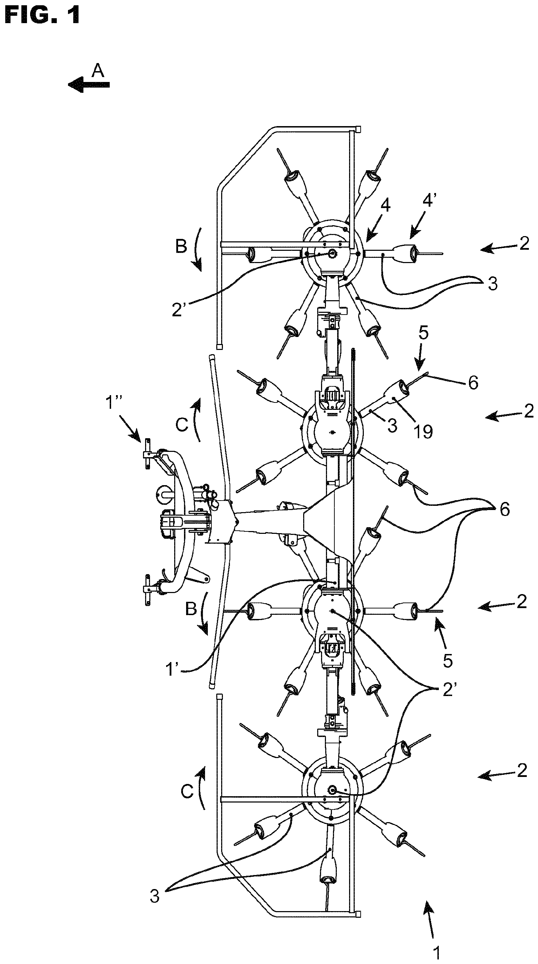

Comme le montre à titre d'exemple illustratif la figure 1, une machine de fenaison 1 du type faneur ou épandeur rotatif de végétaux comprend typiquement un châssis l' solidaire d'un support d'attelage 1", préférentiellement du type à trois points, pour un accrochage à un tracteur ou analogue. Le châssis l' peut être muni de roues et/ou être porté par le tracteur dans la position de transport de la machine 1.

Le châssis 1' se présente essentiellement sous la forme d'une structure segmentée linéaire, repliable par tronçons et s'étendant, lors de l'utilisation de la machine 1, perpendiculairement à la direction d'avance A. Les différents tronçons sont articulés entre eux, d'une part pour un repliement du châssis 1' en direction du support d'attelage 1" (position de transport). D'autre part, l'articulation des tronçons du châssis 1' permet à la machine 1 d'adapter sa forme aux contours du terrain, améliorant le suivi des dénivellations du sol et de ce fait la qualité de ratissage ainsi que la propreté des végétaux épandus. La figure 1 montre la machine 1 à l'état déployé pour utilisation (position de travail).

Le châssis 1' porte un certain nombre de rotors 2 constitués chacun de plusieurs bras 3 radiaux arrangés autour d'un moyeu 2' qui définit, pour le rotor 2 concerné, un axe de rotation à orientation verticale ou légèrement incliné, de préférence vers l'avant (direction d'avance en utilisation). Ces rotors 2, présents en nombre pair et pouvant présenter des sens de rotation contraires deux par deux (cf. sens de rotation B et C sur la figure 1) pour déplacer les végétaux, de préférence vers l'arrière afin de les retourner et les répartir sur le sol, sont entraînés en rotation par la prise de force du tracteur ou analogue. Dans un mode de fonctionnement spécifique et/ou selon une configuration spécifique de la machine 1, les rotors 2 peuvent être entrainés de manière à constituer des andains. En outre, chaque rotor 2 est équipé d'une ou de plusieurs roulettes d'appui au sol (non visibles sur la figure 1), avantageusement montée(s) folle(s).

A l'extrémité 4' radialement extérieure de chaque bras 3 est fixé un outil de travail 5 avec des brins 6 saillants, formant ainsi une fourche à dents (préférentiellement à deux dents).

Lors de la rotation et du déplacement d'un rotor 2, les outils 5 avec les brins 6 ratissent le sol pour soulever et déplacer des végétaux fauchés et en vrac, tels que de l'herbe ou de la paille, en vue de les retourner, et de les disperser ou de les assembler en andains (en fonction du réglage de la machine 1).

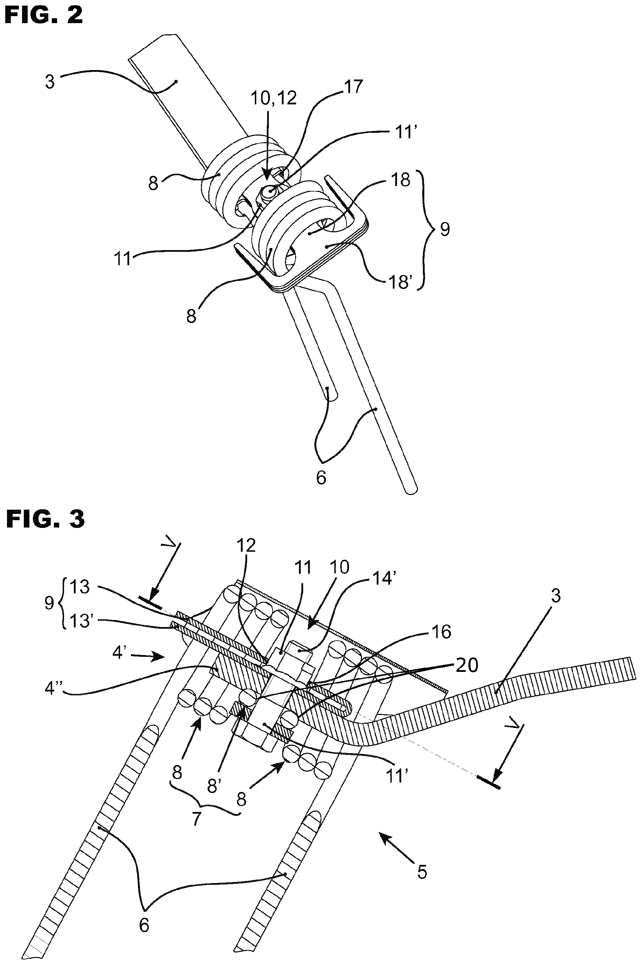

Comme cela ressort plus précisément des figures 2 à 7, la machine de fenaison 1 selon l'invention comprend au moins un rotor 2 comportant au moins un bras support 3 rotatif à extension radiale, avec une extrémité intérieure 4 reliée au moyeu 2' du rotor 2 et une extrémité extérieure 4' opposée portant au moins un outil de travail 5 possédant des brins 6 reliés par une portion intermédiaire 7. Cette portion 7 présente, d'une part, des spires 8 et, d'autre part, au moins une section coudée 8' de fixation au bras support 3, ce bras 3 s'étendant intérieurement à travers au moins certaines des spires 8 et une pièce 9 de rétention de spires 8 désolidarisées du bras support 3 étant rapportée sur ce dernier.

Conformément à l'invention, et comme le montrent les figures 3 à 9, ladite pièce de rétention 9 intègre au moins une partie du ou des moyens de fixation 10 de l'outil de travail 5 concerné sur le bras support 3.

Grâce à cette disposition technique, l'invention permet de réduire le nombre de pièces séparées à mettre en œuvre pour l'assemblage de l'outil de travail 5 avec le bras support 3, permet une solidarisation simultanée de la pièce de rétention 9 et de l'outil de travail 5 avec le bras support 3 et surtout rend plus aisée et moins fastidieuse l'opération de montage et d'assemblage de ces éléments 5 et 9.

Lorsque le ou chaque moyen de fixation 10 est, par exemple, constitué de deux composants coopérant mutuellement pour assurer la fonction de liaison ou de solidarisation, il peut être prévu que l'un de ces deux composants, ou à tout le moins la partie fonctionnelle de liaison ou de solidarisation de l'un de ces deux composants, soit intégré(e) ou incorporé(e) dans la pièce de rétention 9.

Avantageusement, ladite pièce 9 de rétention bloque en rotation un des composants 11 ou 11' du ou des moyen(s) de fixation 10 concerné(s) ou l'incorpore rigidement, de manière monobloc ou rapportée.

De manière tout à fait préférée, le ou chaque moyen de fixation 10 consiste en un boulon et ladite pièce de rétention 9 intègre un filet d'un des deux composants 11 et 11' dudit ou de chaque boulon 10, à savoir de l'écrou 11 ou de la vis 11'.

En relation avec ce type de moyen de fixation en deux parties vissées l'une dans l'autre et fournissant un assemblage mécanique rigide et résistant, aisément démontable et permettant une solidarisation avec un serrage conséquent, l'invention évite d'avoir à maintenir l'un des composants 11, 11' en plus de la pièce de rétention 9.

Préférentiellement, chaque boulon 10 comprend également une rondelle d'appui 11" et un seul boulon 10 est prévu pour chaque outil 5.

Selon un premier mode de réalisation préféré de l'invention, ressortant à titre d'exemple des figures 2 à 5 et 7, la vis 11' ou l'écrou 11 du ou de chaque boulon 10 intégré(e) dans la pièce de rétention 9 est un élément séparé maintenu et retenu dans une découpe 12 de ladite pièce de rétention 9.

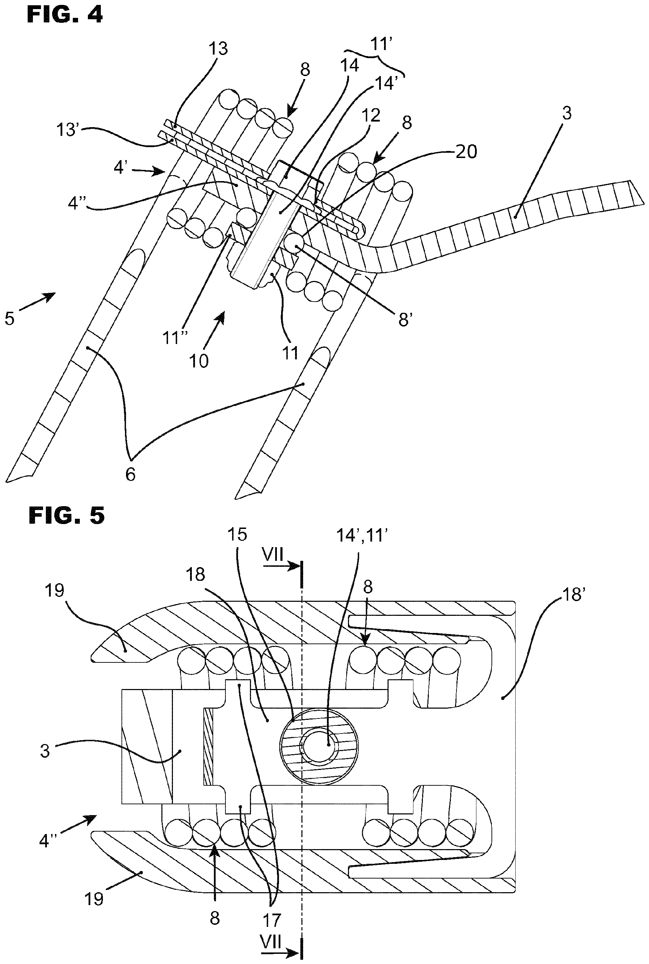

Dans ce mode de réalisation, il est possible d'utiliser une pièce standard pour le ou chaque boulon 10 (peu onéreux), tout en disposant d'une fixation rigide grâce à un filet conséquent, c'est-à-dire de longueur et de diamètre adaptés aux efforts potentiellement nécessaires pour cette fixation. Les figures 3 et 4 illustrent deux variantes de ce mode de réalisation avec emprisonnement soit de l'écrou (figure 3), soit de la vis (figure 4), de façon imperdable (prémontage de la vis 11' ou de l'écrou 11 dans ou sur la pièce de rétention 9).

L'écrou 11 ou la tête de vis 11' ne dispose ainsi d'aucun degré de liberté par rapport à la pièce 9. L'emprisonnement de l'écrou 11 ou de la tête de vis 11' selon tous les degrés de liberté permet d'éviter la perte de l'écrou sans devoir maintenir ou retenir celui-ci, facilitant davantage encore l'assemblage du boulon 10 considéré (par manipulation de la vis seulement).

La vis 11' ou l'écrou 11 est bloqué(e) en rotation dans, de préférence par, la pièce de rétention 9, et de préférence autour de l'axe du boulon 10.

Avantageusement, la vis 11' ou l'écrou 11 est bloqué(e) en rotation autour de l'axe du boulon 10 dans la découpe 12, de préférence par la découpe 12 elle-même. Ainsi, seul un positionnement mutuel en regard des deux composants 11 et 11' à visser ensemble est nécessaire, la pièce de rétention 9 servant ainsi de pièce de maintien d'un des deux composants.

Ce blocage en rotation de l'un des composants 11' ou 11 a pour conséquence que l'assemblage du boulon 10 ne nécessite que la manipulation de l'autre composant 11 ou 11' dudit boulon 10.

Préférentiellement, un seul boulon 10 est prévu pour la fixation de chaque outil de travail 5.

En accord avec une variante très avantageuse de ce premier mode de réalisation de l'invention, illustrée aux figures 3 à 7, la pièce de rétention 9 est rapportée extérieurement sur une face d'une portion d'extrémité extérieure 4" du bras support 3, préférentiellement à structure pleine.

Conformément à une construction pratique de cette variante, la pièce 9 peut comprendre deux parois 13, 13' dont l'une 13 comporte une découpe 12 formant une empreinte de maintien et de blocage en rotation de l'écrou 11 ou de la tête 14 de la vis 11' et dont l'autre 13' comporte un orifice 15 de passage de la tige 14' de la vis 11', l'écrou 11 ou la tête de vis 14 étant emprisonné(e) entre ces deux parois 13 et 13', préférentiellement avec un léger jeu.

Selon une caractéristique de l'invention en accord avec la construction précitée, l'écrou 11 ou la tête de vis 14 peut comporter une collerette ou un épaulement radial(e) 16 dont le diamètre est au moins légèrement supérieur à la fois à la découpe 12 et à l'orifice 15 de passage de la tige 14' de la vis 11'. On entend par-là que le diamètre de la collerette ou de l'épaulement radial(e) 16 est au moins légèrement supérieur à la largeur de la découpe 12, ainsi qu'à la largeur ou au diamètre de l'orifice 15 de passage de la tige 14' de la vis 11'.

Le composant 11 ou 11' est ainsi incorporé de façon imperdable dans la pièce de rétention 9 par assemblage mécanique et est maintenu de manière relativement fixe dans cette dernière.

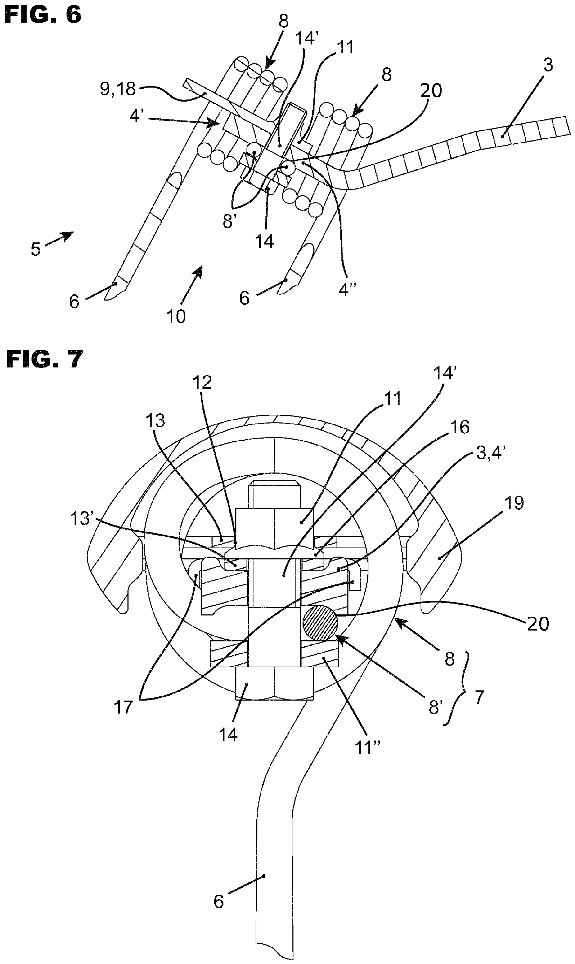

Selon un deuxième mode de réalisation de l'invention, représenté notamment à la figure 6, le composant 11, 11' du ou de chaque boulon 10, qui est intégré dans la pièce de rétention 9, est solidarisé rigidement (par exemple par soudage) ou réalisé d'un seul tenant avec ladite pièce de rétention 9.

La pièce 9 de rétention peut ainsi constituer la vis 11' ou l'écrou 11 du boulon 10 et, selon ce mode de réalisation, la pièce de rétention 9 incorpore un des composants 11 ou 11' constitutifs et mutuellement coopérants du ou des moyen(s) de fixation 10 concerné(s).

La pièce de rétention 9 peut incorporer un des composants 11 ou 11' en les réalisant d'un seul tenant. La pièce d'un seul tenant peut alors par exemple être réalisée par un taraudage, de préférence précédé d'un fluoperçage. Alternativement, un des composants 11 ou 11' peut être assemblé de manière rigide et non démontable avec la pièce 9, par exemple par collage ou soudage.

Dans ce cas, la production de la pièce de rétention 9 permet d'incorporer immédiatement le filet.

En accord avec une caractéristique avantageuse de l'invention, et comme cela ressort des figures 3, 4 et 5 à 9, la section coudée 8' de la position intermédiaire 7 de l'outil de travail 5 considéré est solidarisée avec la portion d'extrémité extérieure 4" du bras support 3 par coincement avec serrage par le moyen de fixation 10, une partie au moins de ladite section coudée 8' étant reçue avec coopération de forme dans une cavité ou un renfoncement 20 formé(e) dans ladite portion d'extrémité 4", dans une composante 11, 11' du moyen de fixation 10 ou dans une pièce d'adaptation intermédiaire 21 montée entre ladite section 8' et ladite portion 4".

La cavité ou le renfoncement 20 qui est présent(e) dans l'une des pièces 4", 11, 11' ou 21 en contact direct avec ladite section coudée 8', et assure sa solidarisation avec maintien rigide par pincement, fait état d'au moins une portion de surface épousant la forme extérieure arrondie (vue en coupe) de ladite section coudée 8 et permet de ce fait de fournir une zone de contact augmentée par coopération de forme, assurant ainsi une meilleure fixation et une meilleure tenue.

Les figures 3 à 9 illustrent différentes variantes constructives pour réaliser la fixation par coincement avec serrage.

Ainsi, la cavité ou le renfoncement 20 peut être ménagé(e) (par exemple par usinage) directement dans le bras 3 (au niveau de la portion 4"), comme le montrent les figures 3, 4, 6 et 7.

Selon une autre variante, non illustrée, mais aisément dérivable des figures précitées, cette cavité ou ce renfoncement 20 peut également être formé(e) dans l'écrou 11 ou dans la tête de vis 14 du boulon 10.

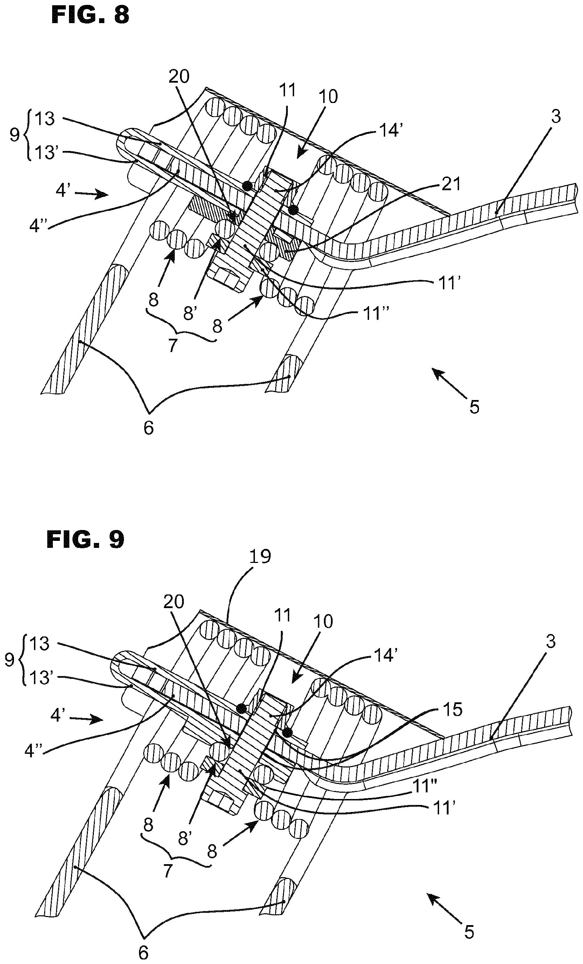

Lorsqu'une pièce d'adaptation intermédiaire 21 est présente, c'est cette dernière qui présente avantageusement ladite cavité ou ledit renfoncement 20 (cf. figures 8 et 9).

En accord avec un troisième mode de réalisation de l'invention, ressortant desdites figures 8 et 9, la pièce de rétention 9 peut comprendre deux parois 13 et 13' s'étendant de part et d'autre de la portion d'extrémité extérieure 4" du bras support 3, en prenant cette portion en sandwich entre elles, préférentiellement avec un pincement élastique même en l'absence de serrage, ces parois 13 et 13' coopérant avec les deux composantes 11 et 11' du moyen de fixation 10 et avec la pièce d'adaptation intermédiaire 21 pour solidariser la pièce de rétention 9 et la section coudée 8' avec la portion d'extrémité 4".

Il peut alors être prévu que l'une des parois 13 et 13' de la pièce de rétention 9 porte ou intègre la composante 11 formant écrou du moyen de fixation 10 et que l'autre paroi, située du côté opposé de la portion d'extrémité extérieure 4", porte ou intègre la pièce d'adaptation intermédiaire 21.

Ainsi, l'écrou 11 peut être soudé sur la paroi 13 considérée ou être formé comme partie intégrante de cette paroi 13 (la vis 11' traverse la portion d'extrémité 4", les deux parois 13 et 13' qui l'encadrent et la pièce d'adaptation 21 au niveau d'orifices traversants et coïncidants).

La pièce d'adaptation 21 peut consister en une pièce séparée rapportée sur la paroi 13' et solidarisée avec cette dernière par exemple par assemblage avec engagement mécanique verrouillé par soudage, collage ou sertissage (figure 8).

La pièce d'adaptation 21 peut aussi, en variante, être réalisée d'un seul tenant avec la pièce de rétention 9 et constituer une partie de la paroi 13' (figure 9), la cavité ou le renfoncement 20 étant alors formé(e) dans cette pièce 9.

Un avantage de ce troisième mode de réalisation est que le bras 3 est coincé par la pièce de rétention 9. De la sorte, la pièce de rétention 9 est avantageusement retenue par coincement sur le bras 3 (même lorsque la tige 14' de la vis 11' n'est pas engagée dans les orifices 15 ou du bras 3) ce qui facilite également le montage. En outre, il est plus simple et moins onéreux de réaliser un usinage sur une pièce de petit calibre comme la pièce de rétention 9, respectivement la pièce d'adaptation 21, que dans une pièce volumineuse comme le bras 3.

Dans ce troisième mode de réalisation également, comme pour le mode de réalisation de la figure 6, l'écrou 11 peut être formé d'un seul tenant ou rapporté avec fixation rigide au niveau de la paroi 13 de la pièce 9.

Pour faciliter davantage encore le montage de la pièce de rétention 9 et du composant 11, 11' du boulon qui y est intégré, et pouvoir aussi assurer un préalignement de la pièce de rétention 9 avec la portion d'extrémité 4" du bras support 3 sur laquelle elle doit être fixée, ladite pièce de rétention 9 peut comprendre un moyen de guidage 17 empêchant sa rotation par rapport au bras support 3 autour de l'axe du boulon 10, ledit moyen de guidage 17 comprenant avantageusement au moins une patte ou une aile (voir figures 2 et 5 par exemple). Ce moyen de guidage 17 peut également faciliter l'alignement au montage entre la pièce 9 et le bras 3.

Une ou plusieurs paire(s) de pattes 17 opposées peuvent efficacement assurer l'alignement et le blocage précités entre la pièce 9 et le bras support 3.

Conformément à une construction pratique avantageuse ressortant des dessins annexés, la pièce de rétention 9 est constituée par une première partie 18 de solidarisation avec le bras support 3, s'étendant dans les spires 8 et intégrant une partie 11, 11' du moyen 10 de fixation de l'outil de travail 5 et par une seconde partie 18' de rétention, s'étendant au-delà de la dernière spire extérieure et présentant une dimension transversale supérieure au diamètre intérieur des spires 8.

Selon une première variante constructive, ressortant des figures 2 à 7 notamment, la pièce de rétention 9 présente une forme générale plate et plane, le cas échéant à double paroi, en forme de T ou de double crochet.

Selon une autre variante constructive, la pièce de rétention peut également former capot 19 de protection et de recouvrement extérieur, au moins partiel, des spires 8 de l'outil de travail 5.

Avantageusement, le capot 19 est alors constitué par un prolongement d'un seul tenant de la seconde partie 18' de la pièce de rétention 9, ledit capot 19 étant éventuellement relié en au moins un deuxième point au bras support 3.

La constitution de la pièce de rétention 9 peut alors s'apparenter à celle décrite et représentée dans le document EP 1 929 857 précité.

En variante et comme le montre la figure 5, un tel capot 19 peut également être une pièce séparée fixée sur le bras support 3 concerné, éventuellement au moins partiellement par l'intermédiaire de la pièce de rétention 9, sur laquelle il peut par exemple être emboîté.

Alors que la pièce de rétention 9 est avantageusement réalisée en métal, le capot 19 peut, quant à lui, être une pièce en matière plastique lorsqu'il est rapporté séparément.

Bien entendu, l'invention n'est pas limitée aux modes de réalisation décrits et représentés aux dessins annexés. Des modifications restent possibles, dans la limite définie par les revendications.

## Revendications

1. Machine de fenaison (1) comprenant au moins un rotor (2) comportant au moins un bras support (3) rotatif à extension radiale, avec une extrémité intérieure (4) reliée au moyeu (2') du rotor (2) et une extrémité extérieure (4') opposée portant au moins un outil de travail (5) possédant des brins (6) reliés par une portion intermédiaire (7) présentant, d'une part, des spires (8) et, d'autre part, au moins une section coudée (8') de fixation au bras support (3), ce bras (3) s'étendant intérieurement à travers au moins certaines des spires (8) et, une pièce (9) de rétention de spires (8) désolidarisées du bras support (3) étant rapportée sur ce dernier **et** ladite pièce de rétention (9) intègre au moins une partie du ou des moyens de fixation (10) de l'outil de travail (5) concerné sur le bras support (3),
**machine (1) caractérisée en ce que le ou chaque moyen de fixation (10) consiste en un boulon et en ce que ladite pièce (9) de rétention bloque en rotation un des composants (11 ou 11') du ou de chacun des boulon(s) (10) ou l'incorpore rigidement, de manière monobloc ou rapportée.**

2. Machine selon la revendication 1, **caractérisée en ce que** ladite pièce de rétention (9) intègre un filet d'un des deux composants (11 et 11') dudit ou de chaque boulon (10), à savoir de l'écrou (11) ou de la vis (11').

3. Machine selon la revendication 2, **caractérisée en ce que** la vis (11') ou l'écrou (11) du ou de chaque boulon (10) intégré(e) dans la pièce de rétention (9) est un élément séparé maintenu et retenu dans une découpe (12) de ladite pièce de rétention (9).

4. Machine selon la revendication 3, **caractérisée en ce que** la vis (11') ou l'écrou (11) est bloqué(e) en rotation autour de l'axe du boulon (10) dans la découpe (12).

5. Machine selon l'une quelconque des revendications 2 à 4, **caractérisée en ce que** la pièce de rétention (9) est rapportée extérieurement sur une face d'une portion d'extrémité extérieure (4") du bras support (3), préférentiellement à structure pleine, et comprend deux parois (13, 13') dont l'une (13) comporte une découpe (12) formant une empreinte de maintien et de blocage en rotation de l'écrou (11) ou de la tête (14) de la vis (11') et dont l'autre (13') comporte un orifice (15) de passage de la tige (14') de la vis (11'), l'écrou (11) ou la tête de vis (14) étant emprisonné(e) entre ces deux parois (13 et 13'), préférentiellement avec un léger jeu.

6. Machine selon la revendication 5, **caractérisée en ce que** l'écrou (11) ou la tête de vis (14) comporte une collerette ou un épaulement radial(e) (16) dont le diamètre est au moins légèrement supérieur à la fois à la découpe (12) et à l'orifice (15) de passage de la tige (14') de la vis (11').

7. Machine selon la revendication 2, **caractérisée en ce que** le composant (11, 11') du ou de chaque boulon (10), intégré dans la pièce de rétention (9), est réalisé d'un seul tenant ou solidarisé rigidement avec ladite pièce de rétention (9).

8. Machine selon l'une quelconque des revendications 1 à 7, **caractérisée en ce que** la section coudée (8') de la position intermédiaire (7) de l'outil de travail (5) considéré est solidarisée avec la portion d'extrémité extérieure (4") du bras support (3) par coincement avec serrage par le moyen de fixation (10), une partie au moins de ladite section coudée (8') étant reçue avec coopération de forme dans une cavité ou un renfoncement (20) formé(e) dans ladite portion d'extrémité (4"), dans une composante (11, 11') du moyen de fixation (10) ou dans une pièce d'adaptation intermédiaire (21) montée entre ladite section (8') et ladite portion (4").

9. Machine selon les revendications 7 et 8, **caractérisée en ce que** la pièce de rétention (9) comprend deux parois (13 et 13') s'étendant de part et d'autre de la portion d'extrémité extérieure (4") du bras support (3), en prenant cette portion en sandwich entre elles, préférentiellement avec un pincement élastique même en l'absence de serrage, ces parois (13 et 13') coopérant avec les deux composantes (11 et 11') du moyen de fixation (10) et avec la pièce d'adaptation intermédiaire (21) pour solidariser la pièce de rétention (9) et la section coudée (8') avec la portion d'extrémité (4").

10. Machine selon la revendication 9, **caractérisée en ce que** l'une (13) des parois (13, 13') de la pièce de rétention (9) porte ou intègre la composante (11) formant écrou du moyen de fixation (10) et **en ce que** l'autre paroi (13'), située du côté opposé de la portion d'extrémité extérieure (4"), porte ou intègre la pièce d'adaptation intermédiaire (21).

11. Machine selon l'une quelconque des revendications 2 à 10, **caractérisée en ce que** la pièce de rétention (9) comprend un moyen de guidage (17) empêchant sa rotation par rapport au bras support (3) autour de l'axe du boulon (10), ledit moyen de guidage (17) comprenant avantageusement au moins une patte ou une aile.

12. Machine selon l'une quelconque des revendications 1 à 11, **caractérisée en ce que** la pièce de rétention (9) est constituée par une première partie (18) de solidarisation avec le bras support (3), s'étendant dans les spires (8) et intégrant une partie (11, 11') du moyen (10) de fixation de l'outil de travail (5) et par une seconde partie (18') de rétention, s'étendant au-delà de la dernière spire extérieure et présentant une dimension transversale supérieure au diamètre intérieur des spires (8).

13. Machine selon l'une quelconque des revendications 1 à 12, **caractérisée en ce que** la pièce de rétention (9) forme également capot (19) de protection et de recouvrement extérieur, au moins partiel, des spires (8) de l'outil de travail (5).

## Patentansprüche

1. Heuwerbungsmaschine (1), umfassend zumindest einen Rotor (2), der zumindest einen sich radial erstreckenden drehbaren Tragarm (3) aufweist mit einem inneren Ende (4), das mit der Nabe (2') des Rotors (2) verbunden ist, und einem gegenüberliegenden äußeren Ende (4'), das zumindest ein Arbeitswerkzeug (5) trägt, das Litzen (6) besitzt, die durch einen Zwischenabschnitt (7) verbunden sind, der einerseits Windungen (8) und andererseits zumindest einen gebogenen Bereich (8') zur Befestigung am Tragarm (3) aufweist, wobei sich dieser Arm (3) innen durch zumindest einige der Windungen (8) erstreckt, eine Halterung (9) zum Halten von Windungen (8), die sich vom Tragarm (3) gelöst haben, mit Letzterem verbunden ist und wobei die Halterung (9) zumindest einen Teil des oder der Befestigungsmittel(s) (10) des betreffenden Arbeitswerkzeugs (5) am Tragarm (3) einschließt,
wobei die Maschine (1) **dadurch gekennzeichnet ist, dass** das bzw. jedes Befestigungsmittel (10) aus einem Bolzen besteht und dass die Halterung (9) eines der Bauteile (11 oder 11') des bzw. jedes der Bolzen(s) (10) gegen Drehung sichert oder es starr, einstückig oder angefügt einschließt.

2. Maschine nach Anspruch 1, **dadurch gekennzeichnet, dass** die Halterung (9) ein Gewinde eines der beiden Bauteile (11 und 11') des bzw. jedes Bolzens (10), d. h. der Mutter (11) oder der Schraube (11'), einschließt.

3. Maschine nach Anspruch 2, **dadurch gekennzeichnet, dass** die Schraube (11') oder die Mutter (11) des bzw. jedes Bolzens (10), die in die Halterung (9) eingeschlossen ist, ein separates Element ist, das in einer Aussparung (12) der Halterung (9) aufgenommen und gehalten wird.

4. Maschine nach Anspruch 3, **dadurch gekennzeichnet, dass** die Schraube (11') oder die Mutter (11) in der Aussparung (12) gegen Drehung um die Achse des Bolzens (10) gesichert ist.

5. Maschine nach einem der Ansprüche 2 bis 4, **dadurch gekennzeichnet, dass** die Halterung (9) außen an einer Fläche eines äußeren Endabschnitts (4") des Tragarms (3), vorzugsweise in Vollstruktur, angebracht ist und zwei Wände (13, 13') umfasst, von denen eine (13) eine Aussparung (12) aufweist, die eine Vertiefung zum Halten und zur Drehsicherung der Mutter (11) oder des Kopfs (14) der Schraube (11') ausbildet, und von denen die andere (13') eine Öffnung (15) für den Durchgang des Schafts (14') der Schraube (11') aufweist, wobei die Mutter (11) oder der Kopf der Schraube (14) zwischen diesen beiden Wänden (13 und 13') gefangen ist, vorzugsweise mit einem geringen Spiel.

6. Maschine nach Anspruch 5, **dadurch gekennzeichnet, dass** die Mutter (11) oder der Kopf der Schraube (14) einen radialen Kragen oder Vorsprung (16) aufweist, dessen Durchmesser zumindest geringfügig größer als sowohl die Aussparung (12) als auch die Öffnung (15) für den Durchgang des Schafts (14') der Schraube (11') ist.

7. Maschine nach Anspruch 2, **dadurch gekennzeichnet, dass** das Bauteil (11, 11') des bzw. jedes Bolzens (10), das in die Halterung (9) eingeschlossen ist, einstückig ausgeführt oder starr mit der Halterung (9) verbunden ist.

8. Maschine nach einem der Ansprüche 1 bis 7, **dadurch gekennzeichnet, dass** der gebogene Bereich (8') des Zwischenabschnitts (7) des betreffenden Arbeitswerkzeugs (5) durch Klemmen mit Festziehen durch das Befestigungsmittel (10) fest mit dem äußeren Endabschnitt (4") des Tragarms (3) verbunden ist, wobei zumindest ein Teil des gebogenen Abschnitts (8') formschlüssig in einem Hohlraum oder einer Ausnehmung (20), der bzw. die in dem Endabschnitt (4"), in einem Bauteil (11, 11') des Befestigungsmittels (10) oder in einem zwischen dem Abschnitt (8') und dem Abschnitt (4") montierten Zwischenadapterstück (21) ausgebildet ist, aufgenommen ist.

9. Maschine nach Anspruch 7 und 8, **dadurch gekennzeichnet, dass** die Halterung (9) zwei Wände (13 und 13') umfasst, die sich auf beiden Seiten des äußeren Endabschnitts (4") des Tragarms (3) erstrecken, indem sie diesen Abschnitt zwischen einander einklemmen, vorzugsweise mit einer elastischen Klemmverbindung auch bei fehlendem Festziehen, wobei diese Wände (13 und 13') mit den beiden Bauteilen (11 und 11') des Befestigungsmittels (10) und mit dem Zwischenadapterstück (21) zusammenwirken, um die Halterung (9) und den gebogenen Bereich (8') mit dem Endabschnitt (4") zu verbinden.

10. Maschine nach Anspruch 9, **dadurch gekennzeichnet, dass** eine (13) der Wände (13, 13') der Halterung (9) das Bauteil (11), das die Mutter des Befestigungsmittels (10) ausbildet, trägt oder einschließt und dass die andere Wand (13'), die sich auf der gegenüberliegenden Seite des äußeren Endabschnitts (4") befindet, den Zwischenadapterteil (21) trägt oder einschließt.

11. Maschine nach einem der Ansprüche 2 bis 10, **dadurch gekennzeichnet, dass** die Halterung (9) ein Führungsmittel (17) umfasst, das seine Drehung relativ zum Tragarm (3) um die Achse des Bolzens (10) verhindert, wobei das Führungsmittel (17) vorteilhafterweise zumindest eine Lasche oder einen Flügel umfasst.

12. Maschine nach einem der Ansprüche 1 bis 11, **dadurch gekennzeichnet, dass** die Halterung (9) aus einem ersten Teil (18) zur Verbindung mit dem Tragarm (3), der sich in den Windungen (8) erstreckt und einen Teil (11, 11') des Mittels (10) zur Befestigung des Arbeitswerkzeugs (5) einschließt, und aus einem zweiten Teil (18') zum Halten, der sich über die letzte äußere Windung hinaus erstreckt und eine Querabmessung aufweist, die größer als der Innendurchmesser der Windungen (8) ist, gebildet ist.

13. Maschine nach einem der Ansprüche 1 bis 12, **dadurch gekennzeichnet, dass** die Halterung (9) auch eine Kappe (19) ausbildet, um die Windungen (8) des Arbeitswerkzeugs (5) zu schützen und zumindest teilweise von außen abzudecken.

## Claims

1. Haymaking machine (1) including at least one rotor (2) comprising at least one radially extending rotary support arm (3), with an inner end (4) connected to the hub (2') of the rotor (2) and an opposite outer end (4') carrying at least one working implement (5) having tines (6) connected by an intermediate portion (7) exhibiting, on the one hand, coils (8) and, on the other hand, at least one bent section (8') for fixing to the support arm (3), wherein this arm (3) extends internally through at least some of the coils (8), a component (9) for retaining coils (8) that are separated from the support arm (3) is mounted on the latter and said retaining component (9) incorporates at least part of the means (10) for fixing the working implement (5) concerned to the support arm (3),
machine (1) **characterised in that** the or each fixing means (10) consists of a nut and bolt assembly and **in that** said retaining component (9) prevents rotation of one of the components (11 or 11') of the or each of the nut and bolt assemblies (10) or incorporates it rigidly, in monobloc or mounted fashion.

2. Machine according to claim 1, **characterised in that** said retaining component (9) incorporates a thread of one of the two components (11 and 11') of said or each nut and bolt assembly (10), namely the nut (11) or the bolt (11').

3. Machine according to claim 2, **characterised in that** the bolt (11') or nut (11) of the or each nut and bolt assembly (10) incorporated in the retaining component (9) is a separate element held and retained in a slot (12) in said retaining component (9).

4. Machine according to claim 3, **characterised in that** the bolt (11') or nut (11) is prevented from rotating about the axis of the nut and bolt assembly in the slot (12).

5. Machine according to any one of claims 2 to 4, **characterised in that** the retaining component (9) is mounted externally on a face of an outer end portion (4") of the support arm (3), preferably with solid structure, and comprises two walls (13, 13') one (13) of which comprises a slot (12) forming an indentation for holding and preventing rotation of the nut (11) or of the head (14) of the bolt (11') and the other (13') of which comprises an orifice (15) for passage of the shank (14') of the bolt (11'), the nut (11) or bolt head (14) being captured between these two walls (13 and 13'), preferably with a slight clearance.

6. Machine according to claim 5, **characterised in that** the nut (11) or the bolt head (14) comprises a radial collar or shoulder (16) of which the diameter is at least slightly greater than both the slot (12) and the orifice (15) for passage of the shank (14') of the bolt (11').

7. Machine according to claim 2, **characterised in that** the component (11, 11') of the or each nut and bolt assembly (10) that is incorporated in the retaining component (9) is made in one piece with or rigidly fixed to said retaining component (9).

8. Machine according to any one of claims 1 to 7, **characterised in that** the bent section (8') of the intermediate portion (7) of the working implement (5) in question is fixed to the outer end portion (4") of the support arm (3) by wedging with tightening by the fixing means (10), at least a portion of said bent section (8') being received with cooperation of shape in a cavity or recess (20) formed in said end portion (4"), in a component (11, 11') of the fixing means (10) or in an intermediate adaptation component (21) mounted between said section (8') and said portion (4").

9. Machine according to claims 7 and 8, **characterised in that** the retaining component (9) comprises two walls (13 and 13') extending on either side of the outer end portion (4") of the support arm (3), sandwiching this portion between them, preferably with elastic pinching even in the absence of tightening, these walls (13 and 13') cooperating with the two components (11 and 11') of the fixing means (10) and with the intermediate adaptation component (21) in order to fix the retaining component (9) and the bent section (8') to the end portion (4").

10. Machine according to claim 9, **characterised in that** one (13) of the walls (13, 13') of the retaining component (9) carries or incorporates the nut-forming component (11) of the fixing means (10) and **in that** the other wall (13'), situated on the opposite side of the outer end portion (4"), carries or incorporates the intermediate adaptation component (21).

11. Machine according to any one of claims 2 to 10, **characterised in that** the retaining component (9) comprises a guide means (17) preventing rotation thereof in relation to the support arm (3) about the axis of the nut and bolt assembly (10), said guide means (17) advantageously including at least one leg or wing.

12. Machine according to any one of claims 1 to 11, **characterised in that** the retaining component (9) consists of a first part (18) for fixing to the support arm (3), extending in the coils (8) and incorporating a part (11, 11') of the means (10) for fixing the working implement (5), and a second retaining part (18') extending beyond the last outer coil and having a transverse dimension greater than the inside diameter of the coils (8).

13. Machine according to any one of claims 1 to 12, **characterised in that** the retaining component (9) also forms a hood (19) for the protection and at least partial external covering of the coils (8) of the working implement (5).
